# EUROPÄISCHE PATENTANMELDUNG

(11) **EP 1 898 134 A2**
(43) Veröffentlichungstag der Anmeldung: **12.03.2008**
(21) Anmeldenummer: 07115762.2
(22) Anmeldetag: 05.09.2007
(51) Int. Cl.: F16K 5/04, F16K 5/10

(54) **Drosseleinrichtung für Heiz- und Kühlanlagen**

(30) Priorität: 06.09.2006 DE 102006042166
(71) Anmelder: Helmstädter, Werner, 74834 Elztal (DE)
(72) Erfinder: Helmstädter, Werner, 74834, Elztal (DE); Ebert, Eberhard, 36088, Hünfeld (DE)
(74) Vertreter: Haar, Lucas Heinz Jörn

(57) **Zusammenfassung**

Bei einer Drosseleinrichtung (1) für Heizungsanlagen mit flüssigem Wärmeträger, mit einem Gehäuse (3), das eine Einlassöffnung und eine Auslassöffnung für den Wärmeträger hat und einen die Einlassöffnung (7) mit der Auslassöffnung (25) verbindenden Hohlraum umschließt, und einem in dem Hohlraum angeordneten, verstellbaren Drosselelement (4), das in mehreren Drosselstellungen mit verschiedenen Drosselwiderständen einstellbar ist, ist eine Anzahl verschiedener Drosselstellungen fest vorgegeben und gekennzeichnet, wobei jede der gekennzeichneten Drosselstellung jeweils einer bestimmte Länge der die Kreise der Anlage bildenden einheitlichen Rohrleitung zugeordnet ist und die Drosselwiderstände jeder der gekennzeichneten Drosselstellungen so ausgelegt sind, dass sie in der Summe mit dem Strömungswiderstand der ihnen zugeordneten Leitungslänge den Strömungswiderstand ergibt, den die längste der den gekennzeichneten Drosselstellungen zugeordnete Leitung hat.

## Beschreibung

Die Erfindung betrifft eine Drosseleinrichtung für Heiz- und Kühlanlagen mit flüssigem Wärmeträger, insbesondere Fußbodenheizungsanlagen, mit einem Gehäuse, das eine Einlassöffnung und eine Auslassöffnung für den Wärmeträger hat und einen die Einlassöffnung mit der Auslassöffnung verbindenden Hohlraum umschließt, und einem in dem Hohlraum angeordneten, verstellbaren Drosselelement, das in mehrere Drosselstellungen mit verschiedenen Drosselwiderständen einstellbar ist, wobei mittels einer Skala eine Anzahl verschiedener Drosselstellungen fest vorgegeben und gekennzeichnet ist.

Drosseleinrichtungen der angegebenen Art werden in Heiz- oder Kühlanlagen verwendet, die mehrere Wärmeträgerkreisläufe unterschiedlicher Größe umfassen, die an eine gemeinsame Fördereinrichtung für den Wärmeträger angeschlossen sind. Häufige Anwendungen sind Warmwasserheizungsanlagen mit im Fußboden verlegten Heizregistern als Wärmetauscher, wobei verschiedene Heizregister jeweils einen gesondert regelbaren Heizkreis bilden. Bedingt durch die unterschiedliche Größe und den unterschiedlichen Wärmebedarf der verschiedenen Räume können sich hierbei sehr große Unterschiede in der Größe und dementsprechend auch im Strömungswiderstand der verschiedenen Heizkreise ergeben. Da im Allgemeinen in einer Heizungsanlage alle Heizregister aus Rohren gleicher Abmessungen bestehen, hat dies zur Folge, dass der Heizkreis mit dem größten Heizregister den größten Strömungswiderstand hat, so dass er bei gegebenem Förderdruck der den Heizkreisen gemeinsamen Fördereinrichtung von der kleinsten Heizwassermenge durchströmt wird und die Heizleistung entsprechend unzureichend ist. Um dies zu vermeiden, ist es bekannt, im Vorlauf oder im Rücklauf von Heizkreisen einstellbare Drosseleinrichtungen anzuordnen, um die maximalen Durchflussmengen der verschiedenen Heizkreise aufeinander abzustimmen und soweit erforderlich zu begrenzen.

DE 298 06 215 U1 beschreibt eine Vorrichtung zum Anzeigen und Begrenzen der Durchflussmenge für einen Heizkreislauf, die eine Drosseleinrichtung der eingangs genannten Art enthält. Diese Vorrichtung soll in den Vorlauf von Heizkreisläufen integriert werden, um die maximale Durchflussmenge einzustellen und die Einstellung über eine Mess- und Anzeigevorrichtung für Durchflussmengen gleichzeitig zu kontrollieren. Die Drosseleinrichtung ist ein rohrförmiger Drehschieber mit einer ein Verteilerrohr durchsetzenden Hülse, die eine radiale Durchflussöffnung besitzt, und mit einer Einstellbuchse, die innerhalb der Hülse drehbar angeordnet ist und eine Durchflussbegrenzungsöffnung hat. Durch Verdrehen der Einstellbuchse gegenüber der Hülse werden die Durchflussöffnung und die Durchflussbegrenzungsöffnung mehr oder weniger zur Deckung gebracht, und es wird eine mehr oder weniger starke Begrenzung der Durchflussmenge durch Drosselung erzielt.

Weitere Vorrichtungen ähnlicher Art sind aus DE 94 04 156 U1, DE 100 49 129 A1 und DE 201 19 191 U1 bekannt.

Bei allen bekannten Vorrichtungen der vorgenannten Art erfolgt die Stellung der Drosseleinrichtung mit Hilfe einer in die Vorrichtung integrierten Durchflussmess-und -anzeigevorrichtung, die während der Förderung des Wärmeträgermediums die die Drosseleinrichtung durchströmende Durchflussmenge misst und anzeigt. Da jedoch in einer Anlage mit mehreren verbundenen Kreisen, deren Durchflussmenge jeweils über eine verstellbare Drosseleinrichtung beeinflusst wird, bei Änderung der Durchflussmenge eines Kreises sich auch die Durchflussmenge der anderen Kreise verändert, ist vielfaches Nachjustieren notwendig, bis die richtige Einstellung aller Drosseleinrichtungen erreicht ist. Das Einstellen einer größeren Heizanlage ist daher sehr aufwendig. Zwar wird in der Regel versucht, den Einstellaufwand zu verringern und nach zuvor berechneten Strömungswiderständen der einzelnen Kreisläufe die Drosseleinrichtungen schon im Vorhinein auf einen geeigneten Wert einzustellen. In der Praxis zeigt sich aber häufig, dass sich bei der Ausführung der Anlagen Veränderungen ergeben, die in der Berechnung nicht erfasst sind, so dass die Zeitersparnis durch die Voreinstellung oft nur gering ist.

Aus DE 80 33 199 U1 ist ein Verteilerstück für Rohrleitungen einer Fußbodenheizung bekannt, welches zum Anschluss zweier Heizkreise eingerichtet ist, wobei jedem Heizkreis ein rohrförmiger Drehschieber vorgeschaltet ist, der einen verschließbaren oder ganz oder teilweise freigebenden Durchlassquerschnitt hat, wobei die Größe des Durchlassquerschnittes von der Drehwinkelstellung des Drehschiebers abhängig ist. Zur Einstellung des Drehschiebers dient eine drehbare Scheibe mit einer Skala, die im Zusammenwirken mit einer Ablesemarke am Gehäuse eine reproduzierbare Einstellung ermöglicht. Auch hier kann die Einstellung nur nach zuvor berechneten Werten erfolgen, sofern nicht zusätzliche Durchflussmessvorrichtungen vorgesehen sind.

Der Erfindung liegt die Aufgabe zugrunde, eine Drosseleinrichtung der eingangs genannten Art zu schaffen, die ein einfaches Einstellen der erforderlichen Drosselwiderstände für die verschiedenen Kreise einer mehrkreisigen Heiz- oder Kühlanlage auch ohne vorherige Berechnung der vorhandenen Durchflusswiderstände ermöglicht.

Nach der Erfindung wird diese Aufgabe bei einer Drosseleinrichtung der eingangs genannten Art dadurch gelöst, dass jede der gekennzeichneten Drosselstellungen einer bestimmten Kreislänge einer eine Anlage bildenden einheitlichen Rohrleitung zugeordnet ist und dass die Drosselwiderstände der einzelnen gekennzeichneten Drosselstellungen bezogen auf eine bestimmte größte Kreislänge so ausgelegt sind, dass der Drosselwiderstand jeder einzelnen gekennzeichneten Drosselstellung in der Summe mit dem Strömungswiderstand der ihr zugeordneten Leitungslänge jeweils einen Gesamtströmungswiderstand ergibt, der gleich dem Strömungswiderstand ist, den die größte Kreislänge hat.

Die Drosseleinrichtung nach der Erfindung beruht auf der Erkenntnis, dass eine optimale Verteilung des flüssigen Wärmeträgers in einer mehrkreisigen Heiz-oder Kühlanlage dann gegeben ist, wenn der Strömungswiderstand der verschiedenen Kreise ungeachtet ihrer Länge gleich ist. Durch die Einstellung der Drosseleinrichtungen der verschiedenen Kreise ist daher der Kreis mit dem größten Strömungswiderstand, also der längste Kreis, maßgebend. Die entsprechend geringeren Strömungswiderstände der kürzeren Kreise müssen daher mit Hilfe von Drosseleinrichtungen um die sich gegenüber dem längsten Kreis ergebende Widerstandsdifferenz vergrößert werden, da mit im Wesentlichen gleiche Strömungswiderstände in allen Kreisen herrschen und sich eine gleichmäßige Verteilung des Wärmeträgermediums auf die einzelnen Kreise einstellt. Nach der Erfindung wird dieses Ziel auf einfache Weise nun dadurch erreicht, dass die Drosseleinrichtung verschiedenen Leitungslängen einer bestimmten Leitungsart zugeordnete Drosselstellungen bereitstellt, wobei der Drosselwiderstand dieser Drosselstellungen jeweils dem Strömungswiderstand entspricht, den ein Leitungsabschnitt hat, dessen Länge der Differenz aus der Leitungslänge des längsten zugrundegelegten Kreises und der Leitungslänge des gedrosselten Kreises entspricht.

Die Drosseleinrichtung nach der Erfindung hat den Vorteil, dass zur Ermittlung der richtigen Einstellung nur die Länge der in den einzelnen Kreisen verlegten Rohrleitungen bekannt sein muss. Die Markierung des Stellelements der Drosseleinrichtung wird dann auf den der Länge des zu drosselnden Kreises entsprechenden Wert eingestellt, ohne dass es zusätzlicher Messungen bedarf. Die Einstellung ist daher außerordentlich einfach und kann bereits bei der Verlegung der Rohrleitungen vorgenommen werden. Anhand der vorhandenen Markierung ist eine Überprüfung der vorgenommenen Einstellungen auch zu einem späteren Zeitpunkt jederzeit möglich. Da sich die Einstellung jeweils nach der Länge der Rohrleitungen der einzelnen Kreise richtet, ist eine aufwendige Berechnung der Strömungswiderstände entbehrlich. Weiterhin können Abweichungen von der zuvor geplanten und berechneten Ausführung der Kreise durch Erfassung der tatsächlich verlegten Leitungslänge unmittelbar berücksichtigt werden.

Da die Drosselwiderstände der gekennzeichneten und fest vorgegebenen Drosselstellungen an dem Strömungswiderstand des längsten Kreises orientiert sind, ist bei größeren Abweichungen von der als gegeben angenommenen größten Länge eine entsprechende Abweichung bei der Einstellung der Drosselstellungen notwendig. Liegt z.B. die Abweichung der Länge des größten Kreises von der bei der Auslegung der Drosseleinrichtung zugrunde gelegten größten Länge in einem Bereich von 10 %, so kann durch Anheben oder Erniedrigen der einzustellenden Drossellänge um den gleichen Prozentsatz eine noch immer ausreichende Einstellgenauigkeit erreicht werden. Erfindungsgemäß kann auch vorgesehen sein, dass die Drosseleinrichtung mehrere Skalen mit gekennzeichneten Drosselstellungen enthält, wobei den Drosselwiderständen jeder Skala eine andere maximale Kreislänge zugrunde liegt. Weiterhin kann ein Sortiment von austauschbaren Drosselelementen vorgesehen sein, die für unterschiedliche größte Kreislängen ausgelegt sind.

Vorzugsweise ist das Drosselelement der Drosseleinrichtung stufenlos verstellbar und so ausgebildet, dass sich der Drosselwiderstand mit der Verstellung kontinuierlich ändert. Dies hat den Vorteil, dass zwischen den gekennzeichneten Drosselstellungen auch beliebige Zwischenstellungen eingestellt werden können, so dass der Anwender die Einstellung recht genau den jeweils gegebenen Längen der Kreise anpassen kann.

Es kann weiterhin vorgesehen sein, dass das Drosselelement in eine Stellung bewegbar ist, in welcher die Verbindung zwischen der Einlassöffnung und der Auslassöffnung verschlossen ist. Hierdurch kann die Drosseleinrichtung auch zum Sperren des angeschlossenen Kreises genutzt werden.

Eine vorteilhafte Ausgestaltung des erfindungsgemäßen Drosselelements kann weiterhin dadurch erreicht werden, dass das Drosselelement ein rohrförmiger Drehschieber ist, der einen zylindrischen Wandabschnitt mit wenigstens einer diesen durchdringenden Drosselöffnung hat, die mit einer Öffnung in einem den zylindrischen Wandabschnitt umgebenden Gehäuseteil zusammenwirkt. Bei einer solchen Gestaltung der Drosseleinrichtung können die verschiedenen Drosselstellungen auf einer sichtbaren Rotationsfläche des Drehschiebers markiert und jederzeit abgelesen werden, so dass die vorgenommenen Einstellungen gut überprüfbar sind.

Besonders vorteilhaft ist es, wenn der Drehschieber eine Mehrzahl von Drosselöffnungen aufweist, die in wenigstens zwei sich in Umfangsrichtung erstreckenden Reihen gegeneinander versetzt angeordnet sind, wobei sich die Enden der Drosselöffnungen benachbarter Reihen zur Erzielung eines stufenlosen Übergangs einander überlappen. Diese Gestaltung hat den Vorteil, dass nahezu der gesamte Umfang des Drehschiebers und damit ein großer Stellbereich für die Ausbildung des verstellbaren Drosselquerschnitts zur Verfügung steht. Die Einstellgenauigkeit wird hierdurch verbessert und es ergibt sich eine ausreichend große Rotationsfläche zur Anbringung der Kennzeichnungen. Vorzugsweise erstrecken sich die Drosselöffnungen über einen Drehwinkel von wenigstens 260°.

Nach einem weiteren Vorschlag der Erfindung weist die Drosseleinrichtung ein zylindrisches Gehäuse aus Kunststoff mit einer zentralen Bohrung, einem Flansch und einer radial in die Bohrung mündenden Einlassöffnung auf, wobei in der Bohrung ein rohrförmiger Drehschieber mit Drosselöffnungen und einer Flanschscheibe angeordnet ist, die an einem aus der Bohrung herausragenden Ende des Drehschiebers ausgebildet ist und an dem Flansch anliegt, und wobei der Flansch den Rand der Flanschscheibe umgreifende, federnde Rastelemente mit Hinterschneidungen aufweist, in die ein Randbereich der Flanschscheibe eingerastet ist.

Diese Ausgestaltung der Drosseleinrichtung ermöglicht eine einfache und kostengünstige Herstellung ihrer beiden Teile und eine einfache Montage durch Zusammenstecken und Verrasten der beiden Teile. Die federnden Rastelemente sorgen außerdem für einen definierten Reibschluss zwischen dem Gehäuse und dem Drehschieber und ermöglichen dadurch eine Eingrenzung des Drehmoments zum Verstellen des Drehschiebers auf einen geeignet niedrigen Wert, der andererseits ausreicht, um den Drehschieber zuverlässig in der eingestellten Position festzuhalten.

Da die Montage von Gehäuse und Drehschieber sehr einfach ist und auch von Hand vorgenommen werden kann, besteht auch die Möglichkeit, dem Anwender beide Teile der Drosseleinrichtung getrennt zu liefern und für verschiedene maximale Kreislängen unterschiedliche Drehschieberausführungen bereitzustellen, aus denen der Anwender den für den vorliegenden Anwendungsfall passenden auswählt und selbst montiert.

Die Gestaltung hat weiterhin den Vorteil, dass die Stirnfläche der Flanschscheibe viel Platz für die Kennzeichnung der verschiedenen Drosselstellungen bietet. Im Zentrum der Flanschscheibe kann ein Werkzeugeingriffsbereich in Form eines Vorsprungs oder einer Vertiefung ausgebildet sein, der zum Ansetzen eines Werkzeugs zum Drehen des Drehschiebers dient.

Erfindungsgemäß kann weiterhin vorgesehen sein, dass die Bohrung des Gehäuses im Bereich der Einlassöffnung mit dem darin angeordneten Drehschieber eine flüssigkeitsdichte Passung bildet. Es sind daher keine Dichtringe zur Abdichtung des Drehschiebers beiderseits der Einlassöffnung erforderlich, und der Drehschieber kann eine die Einlassöffnung sperrende Stellung einnehmen. Vorzugsweise ist lediglich zwischen dem Flansch und der Flanschscheibe ein Dichtring angeordnet, der die Bohrung des Gehäuses nach außen abdichtet.

Das Gehäuse weist erfindungsgemäß einen den Drehschieber umgebenden Hülsenabschnitt auf, der mit einem Außengewinde versehen ist. Weiterhin kann der Flansch mit Werkzeugeingriffsflächen versehen sein, die zum Ansetzen eines zum Drehen des Gehäuses geeigneten Werkzeugs dienen.

Die Erfindung wird nachfolgend anhand eines Ausführungsbeispiels näher erläutert, das in der Zeichnung dargestellt ist. Es zeigen
- Figur 1: einen Querschnitt durch eine Drosseleinrichtung nach der Erfindung, eingebaut in ein Verteilerrohr,
- Figur 2: eine Stirnansicht der Flanschseite der Drosseleinrichtung gemäß Figur 1,
- Figur 3: eine Abwicklung einer zweireihigen Ausbildung der Drosselöffnungen des Drehschiebers der Drosseleinrichtung gemäß Figur 1 und
- Figur 4: zeigt eine weitere Ausführungsform der erfindungsgemäßen Drosseleinrichtung mit integrierter Durchflussmesseinrichtung.

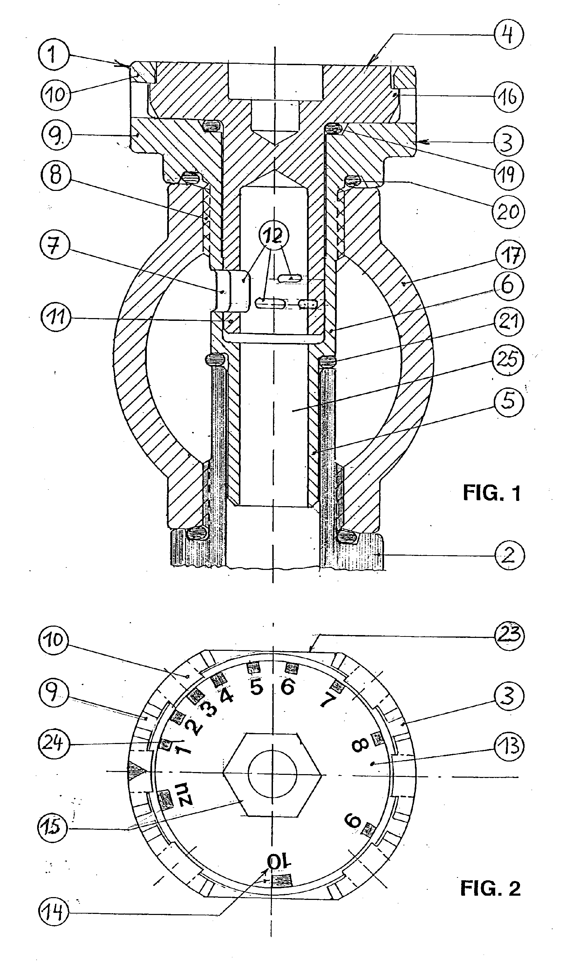

Figur 1 zeigt eine Drosseleinrichtung 1 in üblicher Einbaulage in einem Verteilerrohr 17, welches üblicherweise an den Ausgang einer das Wärmeträgermedium im Kreislauf fördernden Pumpe einer Fußbodenheizungsanlage angeschlossen ist. Die Drosseleinrichtung 1 hat ein einteiliges Gehäuse 3 mit einem Hülsenabschnitt 6, einem Flansch 9, der an einem Ende des Hülsenabschnitts 6 ausgebildet ist, und einen hülsenförmigen Endabschnitt 5, der am anderen Ende des Hülsenabschnitts 6 ausgebildet ist. An den Flansch 9 angrenzend ist der Hülsenabschnitt 6 mit einem Außengewinde 8 versehen und mit diesem in das Innengewinde einer radialen Anschlussbohrung des Verteilerrohres 17 eingeschraubt. Ein Dichtring 20 dichtet das Gehäuse 3 an der Unterseite des Flansches 9 gegenüber dem Verteilerrohr 17 ab. Das dem Flansch 9 entgegengesetzte Ende des Gehäuses 3 ragt mit dem verjüngten Endabschnitt 5 in ein auf der entgegengesetzten Seite in das Verteilerrohr 17 eingeschraubtes Anschlussteil 2 hinein und ist durch einen Dichtring 21, der an einer Stufe zwischen dem Hülsenabschnitt 6 und dem Endabschnitt 5 anliegt, an dem Anschlussteil 2 abgedichtet. Das Anschlussteil 2 dient zum Anschluss eines Heizkreises, dessen Durchflussmenge mit Hilfe der Drosseleinrichtung 1 einstellbar ist.

Das Gehäuse 3 weist eine zentrale Bohrung 25 auf, die sich durch den Flansch 9, den Hülsenabschnitt 6 und den Endabschnitt 5 erstreckt. In der Wand des Hülsenabschnittes 6 befindet sich eine Einlassöffnung 7, welche die Bohrung 25 mit dem Innenraum des Verteilerrohrs 17 verbindet. In der Bohrung 25 ist ein rohrförmiger Abschnitt 11 eines Drehschiebers 4 angeordnet. Der Abschnitt 11 liegt mit seiner Mantelfläche flüssigkeitsdicht an der Wand der Bohrung 25 an. Der Abschnitt 11 ist einteilig mit einer runden Flanschscheibe 13 ausgebildet, die außen auf dem Flansch 9 aufliegt und durch einen Dichtring 19 gegenüber dem Flansch 9 abgedichtet ist. Die Flanschscheibe 13 ist an dem Flansch 9 durch federnde Rastelemente 10 gehalten, die am Rand des Flansches 9 ausgebildet sind und einen ringförmigen Vorsprung 16 am Rand der Flanschscheibe 13 übergreifen. Auf der dem Flansch 9 zugekehrten Seite weist der Vorsprung 16 eine Konusfläche auf, die bei der Montage die Rastelemente 10 auseinander drückt, damit die Flanschscheibe 13 in die dargestellte Raststellung gelangen kann.

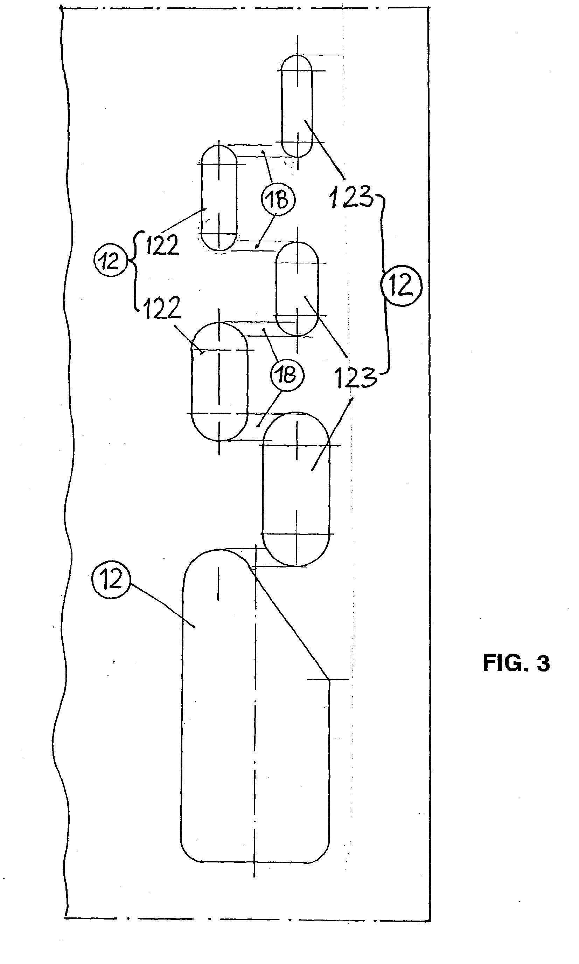

Der rohrförmige Abschnitt 11 des Drehschiebers 4 weist im Bereich der Einlassöffnung 7 mehrere Drosselöffnungen 12 auf, die mit der Einlassöffnung 7 in Überdeckung gebracht werden können. Wie aus der Abwicklung des Abschnitts 11 in Figur 3 zu ersehen, umfassen die Drosselöffnungen 12 eine große Öffnung 121 und mehrere kleinere Öffnungen 122, 123, die in zwei nebeneinander liegenden und sich in Umfangsrichtung erstreckenden Reihen angeordnet sind. In Umfangsrichtung sind die nebeneinander liegenden Drosselöffnungen 122, 123 der beiden Reihen derart gegeneinander versetzt, dass sich ihre Endbereiche in den Umfangsabschnitten 18 überlappen. Die Drosselöffnungen beider Reihen können ganz oder teilweise mit der Einlassöffnung 7 in Verbindung stehen und den Drosselquerschnitt bestimmen. Durch die Ausbildung der Überlappungsbereiche werden Übergangsquerschnitte geschaffen, die beim Verstellen des Drehschiebers für eine im Wesentlichen stufenlose Änderung des Drosselquerschnitts sorgen und sprunghafte Querschnittsänderungen verhindern.

Wie in Figur 2 zu sehen, ist die Flanschscheibe 13 auf ihrer Außenseite mit einer Skala 14 versehen, welche die verschiedenen Drosselstellungen kennzeichnet, die sich aus dem Zusammenwirken von Einlassöffnung 7 und Drosselöffnungen 12 ergeben und definierten Längen des angeschlossenen Heizkreises zugeordneten sind. Die Skala 14 wirkt mit einer Marke 24 am Gehäuse 3 zusammen. Die in der Skala 14 angegebenen Ziffern sind nur beispielhaft. Sie bezeichnen einen jeweils um den Faktor 10 erhöhten Quotienten aus der Rohrleitungslänge des angeschlossenen Heizkreises und der Rohrleitungslänge des längsten Heizkreises. Ist z.B. die Drosseleinrichtung für einen längsten Heizkreis mit einer Rohrleitungslänge von 120 m ausgelegt, so gibt die Ziffer 6 der Skala 14 die Drosselstellung an, die einzustellen ist, wenn die angeschlossene Rohrleitungslänge 72 m beträgt. Eine solche Verhältniszahl hat den Vorteil, dass keine Maßeinheiten berücksichtigt werden müssen. Selbstverständlich können aber in der Skala auch unmittelbar die der jeweiligen Drosselstellung zugeordneten Rohrleitungslängen eingetragen sein.

Aus Figur 2 ist auch zu ersehen, dass sich im Zentrum der Flanschscheibe 13 ein eingetiefter Werkzeugeingriffsbereich 15 in Form eines Innensechskants befindet. Hier kann durch Einstecken eines passenden Werkzeugs das zum Drehen des Drehschiebers 4 erforderliche Drehmoment eingeleitet werden. Zum Montieren der Drosseleinrichtung ist der Flansch 9 auf entgegengesetzten Seiten mit Werkzeugeingriffsflächen 23 versehen.

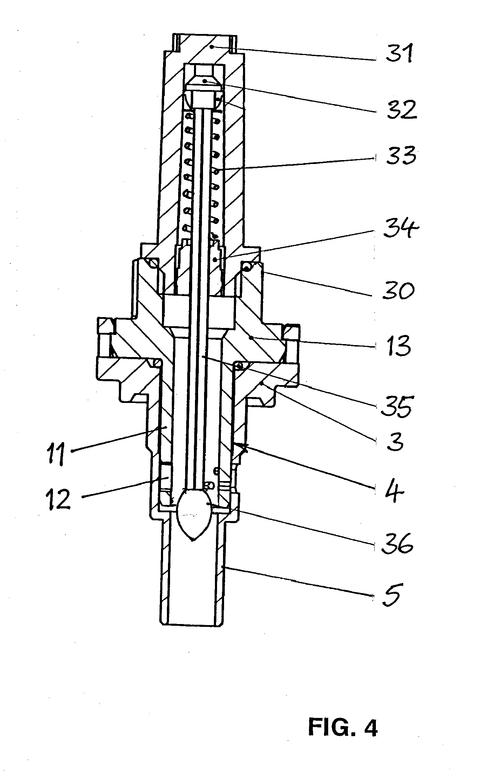

Figur 4 zeigt eine Weiterbildung des Ausführungsbeispiels gemäß den Figuren 1 bis 3. Dieses Ausführungsbeispiel verwendet das gleiche Gehäuse 3, enthält jedoch einen Drehschieber 4, der mit einer Durchflussmesseinrichtung ausgerüstet ist. Hierzu weist die Flanschscheibe 13 auf ihrer Oberseite einen sechskantigen Ansatz 30 auf, dessen Außenfläche zur Einleitung eines Drehmoments mit Hilfe eines Werkzeugs dient. Der Ansatz 30 trägt eine durchsichtige Hülse 31, in der sich ein Anzeigeknopf 32 und eine Druckfeder 33 befindet, die an dem Anzeigeknopf 32 und an einem am Befestigungsende der Hülse 31 angeordneten Stopfen 34 abgestützt ist. Der Anzeigeknopf 32 ist an einem Stößel 35 befestigt, der durch den Stopfen 34 hindurchgeführt ist und an seinem unteren Ende einen tropfenförmigen Widerstandskörper 36 trägt. Der Widerstandskörper 36 befindet sich in der Bohrung des rohrförmigen Abschnitts 11 des Drehschiebers 4 unterhalb der Drosselöffnungen 12. Strömt Wärmeträgermedium durch die Drosselöffnungen 12 in Richtung des Endabschnitts 5 des Gehäuses 3, so wird der einen Strömungswiderstand bildende Widerstandskörper 36 gegen die Kraft der Druckfeder 33 in Richtung des Endabschnitts 5 so weit verschoben, bis die Strömungskraft und die Federkraft im Gleichgewicht sind. Das Maß der Verschiebung des Widerstandskörpers 36 ist an der Position des Anzeigeknopfs 32 ablesbar und ist von der Durchflussmenge abhängig. Durch Anbringung einer geeichten Skala an der Hülse 31 kann daher die gemessene Durchflussmenge bestimmt werden.

Wie bei dem in den Figuren 1 bis 3 gezeigten Ausführungsbeispiel kann auch bei dem Ausführungsbeispiel gemäß Figur 4 die Einstellung des Drosselwiderstands mit Hilfe von Rohrleitungslängen zugeordneten, gekennzeichneten Drosselstellungen erfolgen. Die zusätzliche Durchflussmesseinrichtung kann jedoch zur nachträglichen Feinjustierung und bei Auftreten von Störungen hilfreich sein. Solche Störungen können sich beispielsweise durch eine fehlerhaft verlegte oder beschädigte Rohrleitung oder durch Verschmutzung ergeben.

## Patentansprüche

1. Drosseleinrichtung (1) für Heiz- und Kühlanlagen mit flüssigem Wärmeträger, insbesondere Fußbodenheizungsanlagen, mit einem Gehäuse (3), das eine Einlassöffnung (7) und eine Auslassöffnung für den Wärmeträger hat und einen die Einlassöffnung (7) mit der Auslassöffnung verbindenden Hohlraum umschließt, und einem in dem Hohlraum angeordneten, verstellbaren Drosselelement, das in mehrere Drosselstellungen mit verschiedenen Drosselwiderständen einstellbar ist, wobei mittels einer Skala (24) eine Anzahl verschiedener Drosselstellungen fest vorgegeben und **gekennzeichnet ist, dadurch gekennzeichnet, dass** jede der **gekennzeichneten** Drosselstellungen einer bestimmten Kreislänge einer in einer Anlage verlegten einheitlichen Rohrleitung zugeordnet ist und dass die Drosselwiderstände der einzelnen **gekennzeichneten** Drosselstellungen bezogen auf eine bestimmte größte Kreislänge so ausgelegt sind, dass der Drosselwiderstand jeder einzelnen **gekennzeichneten** Drosselstellung in der Summe mit dem Strömungswiderstand der ihr zugeordneten Leitungslänge jeweils einen Gesamtströmungswiderstand ergibt, der gleich dem Strömungswiderstand ist, den die größte Kreislänge hat.

2. Drosseleinrichtung nach Anspruch 1, **dadurch gekennzeichnet, dass** die Drosseleinrichtung mehrere Skalen mit **gekennzeichneten** Drosselstellungen enthält, wobei den Drosselwiderständen jeder Skala eine andere maximale Kreislänge zugrunde liegt.

3. Drosseleinrichtung nach einem der Ansprüche 1 oder 2, **dadurch gekennzeichnet, dass** sie ein Sortiment von mehreren austauschbaren Drosselelementen aufweist, die für unterschiedliche größte Kreislängen ausgelegt sind.

4. Drosseleinrichtung nach einem der vorhergehenden Ansprüche, **dadurch gekennzeichnet, dass** Drosselelement stufenlos verstellbar und so ausgebildet ist, dass sich der Drosselwiderstand mit der Verstellung kontinuierlich ändert.

5. Drosseleinrichtung nach einem der vorhergehenden Ansprüche, **dadurch gekennzeichnet, dass** das Drosselelement in eine Stellung bewegbar ist, in welcher die Verbindung zwischen der Einlassöffnung (7) und der Auslassöffnung verschlossen ist.

6. Drosseleinrichtung nach einem der vorhergehenden Ansprüche, **dadurch gekennzeichnet, dass** das Drosselelement ein rohrförmiger Drehschieber (4) ist, der einen zylindrischen Wandabschnitt (11) mit wenigstens einer diesen durchdringenden Drosselöffnung (12) hat, die mit einer Öffnung in einem den zylindrischen Wandabschnitt umgebenden Gehäuseteil (6) zusammenwirken.

7. Drosseleinrichtung nach einem der vorhergehenden Ansprüche, **dadurch gekennzeichnet, dass** der Drehschieber (4) eine Mehrzahl von Drosselöffnungen (12) aufweist, die wenigstens zwei sich in Umfangsrichtung erstreckenden Reihen gegeneinander versetzt angeordnet sind, wobei sich die Enden der Drosselöffnungen (12) benachbarter Reihen einander überlappen.

8. Drosseleinrichtung nach einem der vorhergehenden Ansprüche, **dadurch gekennzeichnet, dass** sich die Drosselöffnung (12) oder eine Mehrzahl von Drosselöffnungen (12) über einen Drehwinkel von wenigstens 260° erstreckt.

9. Drosseleinrichtung nach einem der vorhergehenden Ansprüche, **dadurch gekennzeichnet, dass** die Drosseleinrichtung ein zylindrisches Gehäuse (3) aus Kunststoff mit einer zentralen Bohrung (25), einem Flansch (9) und einer radial in die Bohrung (25) mündenden Einlassöffnung (7) aufweist, wobei in der Bohrung (25) ein rohrförmiger Drehschieber (4) mit Drosselöffnungen (12) und einer Flanschscheibe (13) angeordnet ist, die an einem aus der Bohrung (25) herausragenden Ende des Drehschiebers (4) ausgebildet ist und an dem Flansch (9) anliegt und wobei der Flansch (9) den Rand der Flanschscheibe (13) umgreifende, federnde Rastelemente (10) mit Hinterschneidungen aufweist, in die ein Randbereich (16) der Flanschscheibe (13) eingerastet ist.

10. Drosseleinrichtung nach einem der vorhergehenden Ansprüche, **dadurch gekennzeichnet, dass** die Bohrung (25) des Gehäuses (3) im Bereich der Einlassöffnung (7) mit dem darin angeordneten Drehschieber (4) eine flüssigkeitsdichte Passung bildet.

11. Drosseleinrichtung nach einem der vorhergehenden Ansprüche, **dadurch gekennzeichnet, dass** das Gehäuse (3) einen den Drehschieber umgebenden Hülsenabschnitt (6) aufweist, der mit einem Außengewinde (8) versehen ist.

12. Drosseleinrichtung nach einem der vorhergehenden Ansprüche, **dadurch gekennzeichnet, dass** der Flansch (9) mit Werkzeugeingriffsflächen zum Ansetzen eines zum Drehen des Gehäuses (3) geeigneten Werkzeugs versehen ist.
